# EUROPÄISCHE PATENTSCHRIFT

(11) **EP 2 295 199 B1**
(45) Veröffentlichungstag und Bekanntmachung des Hinweises auf die Patenterteilung: **09.05.2012**
(21) Anmeldenummer: 10006677.8
(22) Anmeldetag: 28.06.2010
(51) Int. Cl.: B23Q 1/01, B23Q 3/157

(54) **Bearbeitungszentrum mit einem Werkzeugmagazin innerhalb des Bearbeitungszentrums und einem Werkzeugregalmagazin außerhalb des Bearbeitungszentrums**
Processing centre with a tool storage within the processing centre and a tool storage shelf outside the processing centre
Centre de traitement doté d'un magasin d'outils à l'intérieur du centre de traitement et d'une étagère magasin d'outils à l'extérieur du centre de traitement

(30) Priorität: 10.09.2009 DE 102009041075
(43) Veröffentlichungstag der Anmeldung: 16.03.2011
(73) Patentinhaber: Maschinenfabrik Berthold Hermle Aktiengesellschaft, D-78559 Gosheim (DE)
(72) Erfinder: Bernhard, Franz-Xaver, 78549 Spaichingen (DE); Schwörer, Tobias, Dipl.-Ing., 78598 Königsheim (DE)
(74) Vertreter: Hager, Thomas Johannes

(56) Entgegenhaltungen:
- EP-A2- 1 188 511
- DE-U1- 20 022 567

## Beschreibung

Die Erfindung betrifft ein Bearbeitungszentrum, insbes. zum Fräsen und Bohren, in Gantry-Bauform mit einem zwischen den Seitenwandungen eines U-förmigen Maschinengestells angeordneten Werkzeugmagazin mit verfahrbaren Werkzeughaltern und einem seitlich außen am U-förmigen Maschinengestell angeordneten modular aufgebauten Werkzeugregalmagazin in Raumportalbauweise mit stationär angebrachten Werkzeughaltern sowie einem zwischen dem Werkzeugmagazin und dem Werkzeugregalmagazin vorgesehenen Werkzeugübergabeplatz.

In der DE 200 22 567 U1 ist ein vertikales Bearbeitungszentrum in Gantry-Bauform mit einer maschinenseitigen Werkzeugwechselvorrichtung und einem modular aufgebauten Werkzeugregalmagazin in Raumportalbauweise mit stationär angebrachten Werkzeughaltern dargestellt. Das Werkzeugregalmagazin ist dabei platzsparend seitlich am U-förmigen Maschinengestell angeordnet. Die Werkzeugübergabe zwischen Werkzeugregalmagazin und Werkzeugwechsler erfolgt durch eine Aussparung in der Seitenwand des U-förmigen Maschinengestells hindurch. Der Transport der Werkzeuge im Werkzeugregalmagazin erfolgt durch eine Handhabungsvorrichtung mit nur drei (linearen) Freiheitsgraden in X-, Y- und Z-Richtung.

Bei dieser Art von Maschinenbauform (Gantry-Bauform) sind auch Ausführungen geläufig, bei denen anstelle eines Werkzeugwechslers ein Werkzeugmagazin mit verfahrbaren Werkzeughaltern im Bereich zwischen den Seitenwandungen angeordnet ist. Bei so einem Werkzeugmagazin werden bei der Übergabe des gewünschten Werkzeugs in die Werkzeugspindel sämtliche im Magazin befindlichen Werkzeuge samt Werkzeughalter bewegt. Der Werkzeugwechselvorgang zwischen Werkzeugspindel und Werkzeugmagazin erfolgt dabei in der Regel durch ein sogenanntes Pick-up-Verfahren. Für diesen Vorgang muss die Werkzeugspindel aus dem eigentlichen Arbeitsbereich in den hintern Maschinenbereich, in den Bereich des Werkzeugmagazins, gefahren werden. Dort nimmt die Werkzeugspindel das Werkzeug direkt aus dem Werkzeugmagazin auf oder legt das Werkzeug im Werkzeugmagazin ab. Werkzeugmagazine mit verfahrbaren Werkzeughaltern können unter anderem als Kettenmagazine, als Trommelmagazine oder als kreisringförmige Magazinscheiben ausgebildet sein.

Die Ausführung mit einem Werkzeugmagazin mit verfahrbaren Werkzeughaltern hat gegenüber der Ausführung mit dem Werkzeugwechsler den Vorteil, dass schon in dem Bearbeitungszentrum selber ein gewisser Vorrat von Werkzeugen für die Bearbeitungsaufgabe zur Verfügung gestellt werden kann. Das seitlich angeordnete Werkzeugregalmagazin ist in diesem Fall quasi nur ein Zusatzmagazin, das, wenn notwendig, noch mehr Werkzeuge für die Bearbeitungsaufgabe bereit stellten kann. In diesem Fall ist das Werkzeugregalmagazin bzw. das Zusatzmagazin eine Ausstattungsoption, die je nach Anforderungen angebaut werden kann oder nicht. Aus diesem Grund sind diese Zusatzmagazine in der Regel auch modular aufgebaut, so dass ein Anbau, auch ein nachträglicher Anbau, ohne Probleme realisiert werden kann. Außerdem kann bei solchen modular aufgebauten Werkzeugregalmagazinen die Speicherkapazität an Werkzeugen ohne größeren Aufwand erweitert werden, indem das Werkzeugregalmagazin in Längsrichtung einfach verlängert und/oder noch eine zweite Regalzeile zusätzlich in das Werkzeugregalmagazin integriert wird. Dies ist auch der große Vorteil der Werkzeugregalmagazine in Raumportalbauweise gegenüber den Werkzeugregalmagazinen, die kreisringförmig aufgebaut sind. Des Weiteren ist der spezifische Flächenbedarf eines Werkzeugregalmagazins in Raumportalbauweise in der Regel geringer als bei einem Werkzeugregalmagazin, das kreisringförmig aufgebaut ist und nur eine Werkzeugablageetage besitzt.

Das in der DE 200 22 567 U1 offenbarte Bearbeitungszentrum mit dem seitlichen Werkzeugregalmagazin in Raumportalbauweise hat folgenden Nachteil:

Da der Werkzeugübergabeplatz zwischen Bearbeitungszentrum und Werkzeugregalmagazin bei der bekannten Anordnung durch eine Aussparung in der Seitenwand des U-förmigen Maschinengestells, unterhalb der Längsführungen in Y-Richtung, realisiert werden muss, wird die Stabilität des Maschinengestells und somit auch die Stabilität der Längsführungen in Y-Richtung sehr negativ beeinflusst und die statische, dynamische und thermische Genauigkeit des Bearbeitungszentrums verschlechtert sich. Die Seitenwandungen haben erheblichen Anteil an der Gesamtstabilität des Bearbeitungszentrums, da sie die Längsführungen in Y-Richtung für gesamten Spindelschlitten der Werkzeugspindel tragen und so die Basis für die linearen Verfahrbewegungen in X-, Y- und Z-Richtung bilden.

Ausgehend von diesem Stand der Technik liegt der vorliegenden Erfindung die Aufgabe zugrunde, die bekannte Lösung unter Beibehaltung ihrer Vorteile dahingehend weiter zu verbessern, dass die Stabilität des U-förmigen Maschinengestells nicht beeinträchtigt wird und weiterhin mit relativ wenig Freiheitsgraden (3 lineare Freiheitsgrade) der Transport der Werkzeuge im Werkzeugregalmagazin realisiert werden kann.

Die Lösung dieser Aufgabe erfolgt bei einem Bearbeitungszentrum, insbes. zum Fräsen und Bohren, in Gantry-Bauform mit einem zwischen den Seitenwandungen eines U-förmigen Maschinengestells angeordneten Werkzeugmagazin mit verfahrbaren Werkzeughaltern und einem seitlich außen am U-förmigen Maschinengestell angeordneten, modular aufgebauten Werkzeugregalmagazin in Raumportalbauweise mit stationär angebrachten Werkzeughaltern sowie einem zwischen dem Werkzeugmagazin und dem Werkzeugregalmagazin vorgesehenen Werkzeugübergabeplatz dadurch, dass der Werkzeugübergabeplatz zwischen dem Werkzeugmagazin und dem Werkzeugregalmagazins im hinteren Eckbereich des U-förmigen Maschinengestells zwischen einer 3-Uhr und 6-Uhr-Position oder zwischen einer 3-Uhr und 12-Uhr-Position liegt.

Infolge dieser Ausgestaltung ist in den Seitenwänden des U-förmigen Maschinengestells keine Aussparung mehr erforderlich und das Werkzeugregalmagazin kann weiterhin relativ platzsparend seitlich in Verlängerung zum Maschinengestell in Längsrichtung angeordnet werden.

Vorteilhafte Weiterbildungen ergeben sich aus den Unteransprüchen.

Gemäß einer bevorzugten Ausgestaltung ist am Werkzeugübergabeplatz eine Handhabungsvorrichtung vorgesehen. Die Handhabungsvorrichtung weist einen Werkzeuggreifer auf, der als 3-fach Teleskoparm ausgebildet und zu zwei Seiten hin ausziehbar ist. Dadurch baut das gesamte Werkzeugregalmagazin, auch als zweizeilige Ausführung, in der Tiefenrichtung relativ schmal.

Gemäß einer bevorzugten Ausgestaltung weisen die beweglichen Werkzeughalter im Werkzeugmagazin in der Beladeposition am Werkzeugübergabeplatz zwischen Werkzeugmagazin und Werkzeugregalmagazin den betragsmäßig gleichen Beladewinkel zur X-Achse auf wie die stationären Werkzeughalter relativ zu ihren Trägern im Werkzeugregal.

Vorteilhafterweise ist das Werkzeugmagazin kreisringförmig ausgebildet.

Gemäß einer bevorzugten Ausgestaltung weist das Werkzeugmagazin Werkzeughalter für die Werkzeuge auf, deren Teilung so ausgeführt ist, dass bei stehendem Werkzeugmagazin gleichzeitig ein Werkzeugwechsel von der Werkzeugspindel zum Werkzeugmagazin und ein Werkzeugwechsel vom Werkzeugregalmagazin zum Werkzeugmagazin durchführbar ist.

Vorteilhafterweise ist jeder Werkzeughalter mit einem Orientierungselement versehen, das mit einer am Werkzeug bzw. am Werkzeugschaft vorgesehenen Orientierungsnut in Eingriff bringbar ist. Weiterhin ist an jedem Werkzeug bzw. an jedem Werkzeugschaft eine Prüfnut vorgesehen, um eine eindeutige Winkelorientierung des Werkzeugs bzw. Werkzeugschafts zu ermöglichen. Dies ist wichtig, damit die Werkzeuge mit der richtigen Winkelorientierung abgelegt werden, da ansonsten die Werkzeuge nicht von der Werkzeugspindel aufgenommen werden können.

Zur Überprüfung der Winkelorientierung kann vorteilhafterweise ein pneumatischer Prüfzylinder vorgesehen sein, welcher in die Prüfnut einfahren kann. Wenn der Prüfzylinder die richtige Position nicht erreicht, z.B. wenn der Prüfzylinder am Bund des Werkzeugs bzw. Werkzeugschafts anstößt, kann der Bestückungsplatz automatisch für die Handhabungsvorrichtung gesperrt und ein fehlerhaft eingelegtes Werkzeug kann nicht mehr weiterverwendet werden.

Weitere Merkmale, Vorteile und Ausgestaltungen ergeben sich aus der nachfolgenden Beschreibung eines Ausführungsbeispiels. Es zeigen:
- Figur 1: eine Draufsicht auf ein erfindungsgemäßes Bearbeitungszentrum,

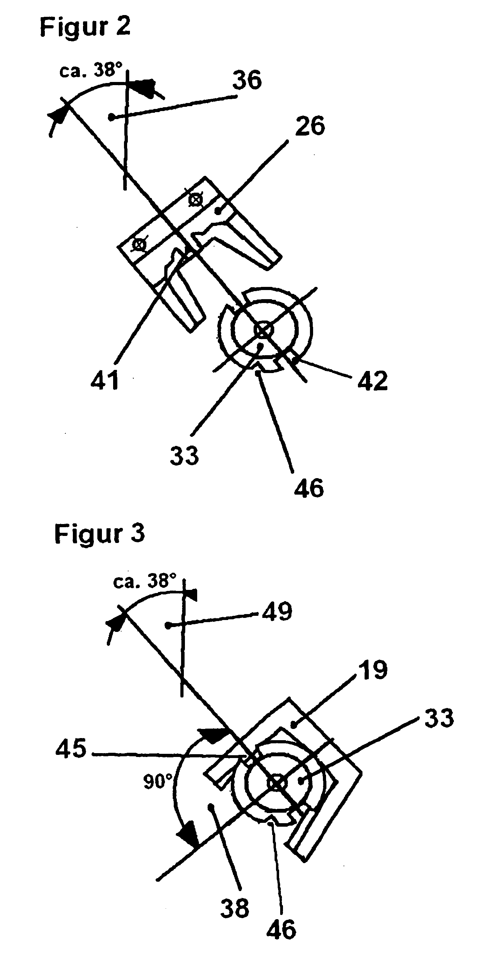

- Figur 2: eine Detailansicht eines stationären Werkzeughalters im Werkzeugregalmagazin,
- Figur 3: eine Detailansicht eines stationären Werkzeughalters, der als Werkzeugbestückungsplatz dient,
- Figur 4: eine Detailansicht eines Werkzeuggreifers,
- Figur 5: eine Detailansicht eines Teleskoparmes, und

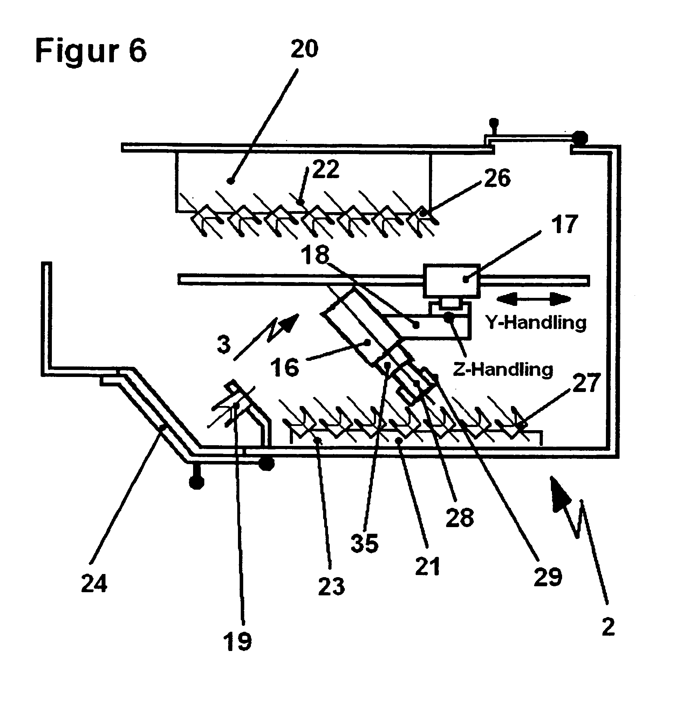

- Figur 6: eine Detailansicht des Werkzeugregalmagazins.

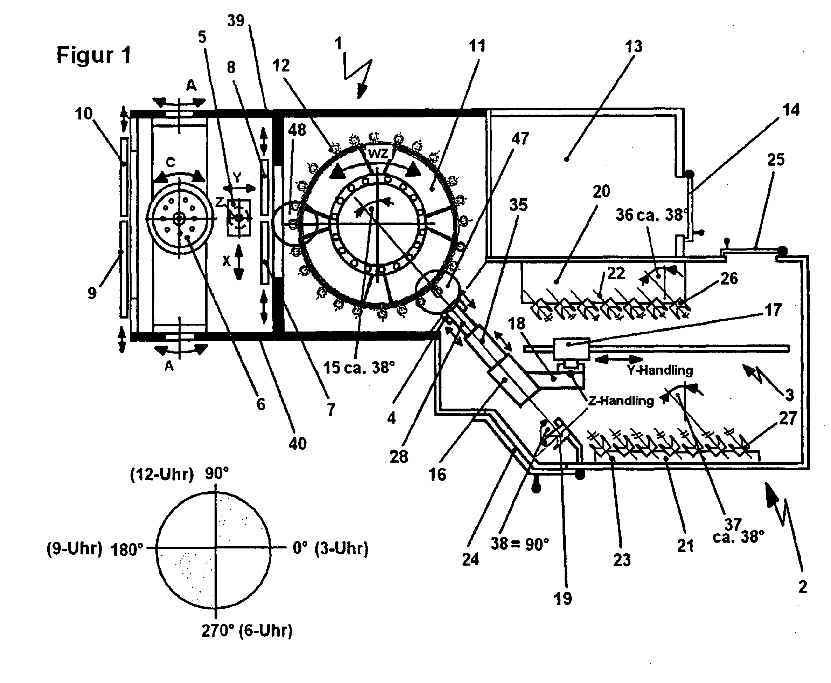

In Figur 1 ist das erfindungsgemäße Bearbeitungszentrum 1 in einer Draufsicht zu sehen.

Das als vertikales Bearbeitungszentrum in Gantry-Bauform ausgebildete Bearbeitungszentrum 1 weist einen um eine horizontale Achse A und eine vertikale Achse C verschwenkbaren Drehtisch 6 zur Aufnahme eines nicht dargestellten Werkstücks auf.

Das nicht dargestellte Werkstück kann von einer vertikal ausgerichteten Werkzeugspindel 5 bearbeitet werden, die in Richtung der Achsen X, Y und Z verstellbar ist.

Das Bearbeitungszentrum 1 weist Seitenwandungen 39, 40 auf, die das U-förmige Maschinengestell begrenzen.

Der Arbeitsraum des Bearbeitungszentrums 1 ist an der Vorderseite durch Schiebetüren 9, 10 und an der Rückseite durch Schiebetüren 7, 8 begrenzt.

Hinter den Schiebetüren 7, 8 befindet sich ein kreisringförmiges Werkzeugmagazin 11, das um eine vertikal ausgerichtete Mittelpunktsachse verdrehbar ist. An der äußeren Peripherie des kreisringförmigen Werkzeugmagazins 11 sind Werkzeughalter 12 angeordnet. Bei einem Werkzeugwechselvorgang wird das gesamte Werkzeugmagazin 11 mit seinen Werkzeughaltern 12 in die gewünschte Beladeposition 48 gedreht, so dass ein Werkzeug 34 aus dem Werkzeugmagazin 11 an die Werkzeugspindel 5 übergeben werden kann.

In der hinteren rechten Ecke des Bearbeitungszentrums 1 - von den Schiebetüren 9, 10 aus gesehen - ist ein Werkzeugregalmagazin 2 angeschlossen. Dieses Werkzeugregalmagazin 2 ist in Raumportalbauweise ausgebildet und weist zwei parallel zueinander verlaufende Träger 20, 21 auf, die jeweils mit mehreren stationär angeordneten Werkzeughaltern 26, 27 versehen sind.

Weiterhin ist in dem Werkzeugregalmagazin 2 ein stationärer Werkzeughalter 19 vorgesehen, der als Werkzeugbestückungsplatz dient.

Die Werkzeughalter 26, 27 mit ihren Werkzeugen 34 (z. B. Fräs- und Bohrwerkzeugen) werden über eine separate Handhabungsvorrichtung 3 in die gewünschte Wechsel- oder Ablageposition im Werkzeugregalmagazin 2 transportiert.

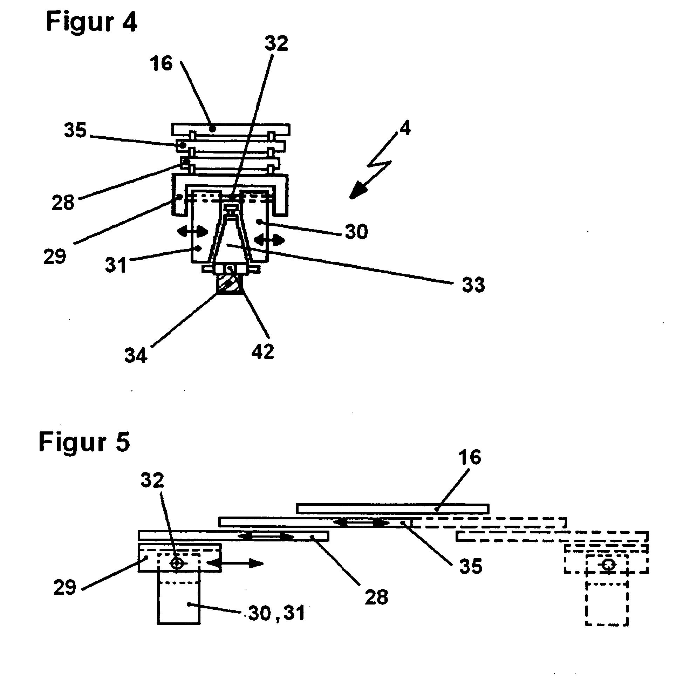

Die Handhabungsvorrichtung 3 weist eine parallel zu den Trägern 20, 21 verlaufende horizontale Schiene auf, auf der ein linear verfahrbarer Führungswagen 17 geführt ist. An dem Führungswagen 17 ist ein um eine vertikale Hochachse linear verfahrbarer Führungsarm 18 befestigt, der eine Halteplatte 16 für einen teleskopartig ausgebildeten, linear verfahrbaren Werkzeuggreifer 4 (vgl. Figur 4) zum Halten der Werkzeughalter 26, 27 trägt.

Der Werkzeuggreifer 4 ist als 3-fach Teleskoparm ausgebildet und weist Teleskopelemente 28 und 35 auf, die von der Halteplatte 16 aus zu beiden Seiten linear verfahrbar sind (vgl. Figur 5).

Am vorderen freien Ende des Teleskopelementes 28 ist eine linear verfahrbare Halteplatte 29 befestigt, die Greiferbacken 30, 31 einer Backenführung 32 zur Aufnahme eines genormten kegelförmigen Werkzeugschaftes 33 für das Werkzeug 34 trägt.

Die Achsen 22, 23 der Werkzeughalter 26, 27 an den Trägern 20, 21 im Werkzeugregalmagazin 2 sind unter einem Winkel 36, 37 von beispielsweise 38° zur X-Achse ausgerichtet. Auch die Achse des Werkzeuggreifers 4 ist unter einem Winkel 15 zur X-Achse ausgerichtet, der dem Winkel 36, 37 der Achsen 22, 23 der Werkzeughalter 26, 27 entspricht und beispielsweise 38° beträgt.

Der stationäre Werkzeughalter 19 ist ebenfalls derart unter einem Winkel 38 angeordnet, dass seine Achse um 90° gegenüber den Achsen 22, 23 und 15 versetzt ist.

Infolge dieser Ausgestaltung haben die Werkzeughalter 26, 27 im Werkzeugregalmagazin 2 den gleichen Beladewinkel wie derjenige Werkzeughalter 12 am Werkzeugmagazin 11, der von der Handhabungsvorrichtung 3 in der Beladeposition 47 bestückt werden kann. Das hat zur Folge, dass die Handhabungsvorrichtung 3 nur drei lineare Freiheitsgrade, nämlich einen ersten Freiheitsgrad in der horizontalen Längsachse (Y-Richtung), einen zweiten Freiheitsgrad in der vertikalen Hochachse (Z-Richtung) und einen dritten Freiheitsgrad in der horizontalen Teleskopachse (parallel zum Beladewinkel) benötigt. Infolge dieser Ausgestaltung muss die Handhabungsvorrichtung 3 im Werkzeugregalmagazin 2 beim Ein- und Auslagern der Werkzeuge 34 keine interpolierenden Bewegungen ausführen, d. h. aufgrund der speziellen Anordnung der Werkzeughalter 26, 27 im Werkzeugregalmagazin 2 (z. B. in der horizontalen Ebene gegenüber der X-Achse um 38° geneigt angeordnet) muss die Handhabungsvorrichtung 3 keine überlagernde Bewegung (Kurve oder Schräge) ausführen. Zur Ein- und Auslagerung ist es ausreichend, wenn zum Beispiel zuerst die Position in Z-Richtung, dann die Position in Y-Richtung angefahren und schließlich der linear verfahrbare Werkzeuggreifer 4 ausgefahren wird.

Einzig beim Aufnehmen oder Ablegen eines Werkzeugs 34 vom oder zum Werkzeughalter 19 am Werkzeugbestückungsplatz muss eine interpolierende Bewegung ausgeführt werden, wobei die Verfahrachse in Y-Richtung und die Bewegung des Werkzeuggreifers 4 zueinander abgestimmt werden müssen, um das Werkzeug 34 aus dem Werkzeughalter 19 herzubekommen bzw. ablegen zu können.

Mit dem Werkzeuggreifer 4 kann somit ein Werkzeug 34 aus dem Werkzeugregalmagazin 2 entnommen und in der Beladeposition 47 an das Werkzeugmagazin 11 übergeben werden. Dabei ist die Teilung der Werkzeughalter 12 im Werkzeugmagazin 11 so gewählt, dass bei stehendem Werkzeugmagazin 11 gleichzeitig ein Werkzeugwechsel von der Werkzeugspindel 5 zum Werkzeugmagazin 11 und ein Werkzeugwechsel vom Werkzeugregalmagazin 2 zum Werkzeugmagazin 11 durchführbar ist.

Das Werkzeugregalmagazin 2 kann von außen über Belade- und Servicetüren 24, 25 betreten werden.

Infolge der beschriebenen Anordnung ergibt sich zwischen dem Werkzeugmagazin 1 und dem Werkzeugregalmagazin 2 ein Werkzeugübergabeplatz, der im hinteren Eckbereich des U-förmigen Maschinengestells zwischen einer 3-Uhr und 6-Uhr-Position gemäß Figur 1 liegt

Alternativ kann das Werkzeugregalmagazin 2 auch im hinteren linken Eck des Bearbeitungszentrums 1 vorgesehen sein, so dass dann der Werkzeugübergabeplatz zwischen einer 3-Uhr und 12-Uhr-Position wiederum gemäß Figur 1 liegt.

Bezüglich der relativen Positionen (3-Uhr und 6-Uhr-Position bzw. 3-Uhr und 12-Uhr-Position) zwischen Werkzeugmagazin 1 und Werkzeugregalmagazin 2 wird der Offenbarungsgehalt der Figur 1 als Bestandteil der Beschreibung angesehen, insbesondere in Bezug auf die geometrische Ausrichtung und Anordnung in X-, Y- und Z-Richtung

Im Bereich hinter dem Bearbeitungszentrum 1 und neben dem Werkzeugregalmagazin 2 befindet sich ein Serviceraum 13, der über eine Zugangstür 14 betreten werden kann.

Jeder Werkzeughalter 26 ist mit einem Orientierungselement 41 versehen, welches mit einer von zwei diametral gegenüberliegenden, am kegelförmigen Werkzeugschaft 33 vorgesehenen Orientierungsnuten 42 in Eingriff bringbar ist, um eine winkelgenaue Positionierung des Werkzeuges 34 im Werkzeughalter 26 zu gewährleisten.

In gleicher Weise ist auch der Werkzeughalter 19 mit einem Orientierungselement 45 versehen, welches mit den am kegelförmigen Werkzeugschaft 33 vorgesehenen Orientierungsnuten 42 in Eingriff bringbar ist.

Im Bundbereich des kegelförmigen Werkzeugschaftes 33 ist weiterhin eine Prüfnut 46 vorgesehen, welche eine einfache Erkennbarkeit der richtigen Winkelpositionierung ermöglicht.

Zur Überprüfung der Winkelorientierung kann auch ein pneumatischer Prüfzylinder vorgesehen sein, welcher in die Prüfnut 46 einfahren kann. Wenn der Prüfzylinder seine Position nicht erreicht, z.B. wenn der Prüfzylinder am Bund des Werkzeugschafts 33 anstößt, kann der Bestückungsplatz automatisch für die Handhabungsvorrichtung 3 gesperrt und ein fehlerhaft eingelegtes Werkzeug 34 kann nicht mehr weiterverwendet werden

### Bezugszeichenliste:

- 1: Bearbeitungszentrum
- 2: Werkzeugregalmagazin
- 3: Handhabungsvorrichtung
- 4: Werkzeuggreifer
- 5: Werkzeugspindel
- 6: Drehtisch
- 7: Schiebetür
- 8: Schiebetür
- 9: Schiebetür
- 10: Schiebetür
- 11: Werkzeugmagazin
- 12: Werkzeughalter
- 13: Serviceraum
- 14: Zugangstür
- 15: Winkel
- 16: Halteplatte
- 17: Führungswagen
- 18: Führungsarm
- 19: Werkzeughalter
- 20, 21: Träger
- 22, 23: Achsen
- 24, 25: Belade- und Servicetür
- 26,27: Werkzeughalter
- 28: Teleskopelement
- 29: Halteplatte
- 30, 31: Greiferbacken
- 32: Backenführung
- 33: Werkzeugschaft
- 34: Werkzeug
- 35: Teleskopelement
- 36, 37: Winkel
- 38: Winkel
- 39, 40: Seitenwandungen
- 41: Orientierungselement
- 42: Orientierungsnut
- 45: Orientierungselement
- 46: Prüfnut
- 47: Beladeposition
- 48: Beladeposition
- 49: Winkel

- A: horizontale Achse
- C: vertikale Achse
- X: Achse
- Y: Achse
- Z: Achse

## Patentansprüche

1. Bearbeitungszentrum (1), insbes. zum Fräsen und Bohren, in Gantry-Bauform mit einem zwischen den Seitenwandungen (39,40) eines U-förmigen Maschinengestells angeordneten Werkzeugmagazin (11) mit verfahrbaren Werkzeughattern (12) und einem seitlich außen am U-förmigen Maschinengestell angeordneten, modular aufgebauten Werkzeugregalmagazin (2) in Raumportalbauweise mit stationär angebrachten Werkzeughaltern (26,27) sowie einem zwischen dem Werkzeugmagazin (11) und dem Werkzeugregalmagazin (2) vorgesehenen Werkzeugübergabeplatz, **dadurch gekennzeichnet, dass** der Werkzeugübergabeplatz zwischen dem Werkzeugmagazin (11) und dem Werkzeugregalmagazin (2) im hinteren Eckbereich des U-förmigen Maschinengestells zwischen einer 3-Uhr und 6-Uhr-Position oder zwischen einer 3-Uhr und 12-Uhr-Position liegt.

2. Bearbeitungszentrum nach Anspruch 1, **dadurch gekennzeichnet, dass** am Werkzeugübergabeplatz eine Handhabungsvorrichtung (3) vorgesehen ist.

3. Bearbeitungszentrum nach Anspruch 1 oder 2, **dadurch gekennzeichnet, dass** in der Beladeposition (47) der Werkzeughalter (12) am Werkzeugmagazin (11) den betragsmäßig gleichen Beladewinkel zur X-Achse aufweist, wie die Werkzeughalter (26, 27) relativ zu ihren Trägern (20, 21) im Werkzeugregalmagazin (2).

4. Bearbeitungszentrum nach einem der Ansprüche 1 bis 3, **dadurch gekennzeichnet, dass** die Handhabungsvorrichtung (3) einen Werkzeuggreifer (4) aufweist, der als 3-fach Teleskoparm ausgebildet ist und zu zwei Seiten hin ausziehbar ist.

5. Bearbeitungszentrum nach einem der Ansprüche 1 bis 4, **dadurch gekennzeichnet, dass** das Werkzeugmagazin (11) kreisringförmig ausgebildet ist.

6. Bearbeitungszentrum nach einem der Ansprüche 1 bis 5, **dadurch gekennzeichnet, dass** das Werkzeugmagazin (11) Werkzeughalter (12) für die Werkzeuge (34) aufweist, deren Teilung so ausgeführt ist, dass bei stehendem Werkzeugmagazin (11) gleichzeitig ein Werkzeugwechsel von der Werkzeugspindel (5) zum Werkzeugmagazin (11) und ein Werkzeugwechsel vom Werkzeugregalmagazin (2) zum Werkzeugmagazin (11) durchführbar ist.

7. Bearbeitungszentrum nach einem der Ansprüche 1 bis 6, **dadurch gekennzeichnet, dass** jeder Werkzeughalter (26, 19) mit einem Orientierungselement (41, 45) versehen, das mit einer am Werkzeugsschaft (33) vorgesehenen Orientierungsnut (42) in Eingriff bringbar ist.

8. Bearbeitungszentrum nach Anspruch 7, **dadurch gekennzeichnet, dass** jeder Werkzeugschaft (33) mit einer Prüfnut (46) versehen ist.

9. Bearbeitungszentrum nach Anspruch 8, **dadurch gekennzeichnet, dass** ein pneumatischer Prüfzylinder vorgesehen ist, welcher in die Prüfnut (46) einfahren kann.

## Claims

1. Machining centre (1), especially for milling and drilling, in gantry design comprising a tool magazine (11) disposed between side walls (39, 40) of a U-shaped machine frame having movable tool holders (12) and a modular tool rack magazine (2) of portal space design arranged laterally outside of the U-shaped machine frame having stationary attached tool holders (26, 27) and a tool transfer position provided between the tool magazine (11) and the tool rack magazine (2), **characterized in that** said tool transfer position is located between the tool magazine (11) and the tool rack magazine (2) in the rear corner section of the U-shaped machine frame between a 3 o'clock position and a 6 o'clock position or between a 3 o'clock position and a 12 o'clock position.

2. Machining centre according to claim 1, **characterized in that** a handling device (3) is provided at the tool transfer position.

3. Machining centre according to claim 1 or 2, **characterized in that** the tool holder (12) at the tool magazine (11) in the loading position (47) thereof is having the absolutely same loading angle to the X-axis as the tool holders (26, 27) relative to the carriers (20, 21) thereof in the tool magazine (2).

4. Machining centre according to one of the claims 1 to 3, **characterized in that** the handling device (3) has a tool gripper (4) being formed as triple telescopic arm and extendable towards two sides.

5. Machining centre according to one of the claims 1 to 4, **characterized in that** the tool magazine (11) is formed in circular ring shape.

6. Machining centre according to one of the claims 1 to 5, **characterized in that** the tool magazine (11) has tool holders (12) for the tools (34), the pitch thereof is such that with stationary tool magazine (11) a tool change from tool spindle (5) to tool magazine (11) and a tool change from tool rack magazine (2) to tool magazine (11) is feasible at the same time.

7. Machining centre according to one of the claims 1 to 6, **characterized in that** each tool holder (26, 19) is provided with an orientation element (41, 45) which can be brought into engagement with an orientation groove (42) provided at the tool shank (33).

8. Machining centre according to claim 7, **characterized in that** each tool shank (33) is provided with a testing groove (46).

9. Machining centre according to claim 8, **characterized in that** a pneumatic testing cylinder is provided which moves into the testing groove (46).

## Revendications

1. Centre d'usinage (1), en particulier pour le fraisage et le forage, du type à portique avec un magasin d'outils (11) doté de porte-outils mobiles (12), disposé entre les parois latérales (39, 40) d'un bâti de machine en forme de U, et un magasin d'outils à étagères (2) modulaire, du type en portique tridimensionnel, disposé latéralement à l'extérieur sur le bâti de machine en forme de U, avec des porte-outils (26, 27) installés de manière stationnaire ainsi qu'un poste de transfert d'outils prévu entre le magasin d'outils (11) et le magasin d'outils à étagères (2), **caractérisé en ce que** le poste de transfert d'outils est situé entre le magasin d'outils (11) le magasin d'outils à étagères (2) dans la zone d'angle arrière du bâti de machine en forme de U entre une position 3 heures et une position 6 heures ou entre une position 3 heures et une position 12 heures.

2. Centre d'usinage selon la revendication 1, **caractérisé en ce qu'**un dispositif de manipulation (3) est prévu au poste de transfert d'outils.

3. Centre d'usinage selon la revendication 1 ou 2, **caractérisé en ce que** dans la position de chargement (47), le porte-outil (12) sur le magasin d'outils (11) présente le même angle de chargement en valeur absolue par rapport à l'axe X que les porte-outils (26, 27) par rapport à leurs supports (20, 21) dans le magasin d'outils à étagères (2).

4. Centre d'usinage selon une des revendications 1 à 3, **caractérisé en ce que** le dispositif de manipulation (3) présente un préhenseur d'outil (4) qui est réalisé sous la forme d'un bras télescopique à trois éléments et qui peut être déployé de deux côtés.

5. Centre d'usinage selon une des revendications 1 à 4, **caractérisé en ce que** le magasin d'outils (11) est réalisé en forme de couronne circulaire.

6. Centre d'usinage selon une des revendications 1 à 5, **caractérisé en ce que** le magasin d'outils (11) présente des porte-outils (12) pour les outils (34), dont le pas est réalisé de façon que lorsque le magasin d'outils (11) est stationnaire, il est possible de réaliser en même temps un changement d'outil de la broche d'outil (5) vers le magasin d'outils (11) et un changement d'outil du magasin d'outils à étagères (2) vers le magasin d'outils (11).

7. Centre d'usinage selon une des revendications 1 à 6, **caractérisé en ce que** chaque porte-outil (26, 19) est pourvu d'un élément d'orientation (41, 45) qui peut être mis en prise avec une rainure d'orientation (42) prévue sur la tige d'outil (33).

8. Centre d'usinage selon la revendication 7, **caractérisé en ce que** chaque tige d'outil (33) est pourvue d'une rainure de contrôle (46).

9. Centre d'usinage selon la revendication 8, **caractérisé en ce qu'**il est prévu un vérin de contrôle pneumatique qui peut rentrer dans la rainure de contrôle (46).
